## Europäisches Patentamt
## European Patent Office
## Office européen des brevets

(19)

(11) Numéro de publication : **0 282 411 B1**

(12)

# FASCICULE DE BREVET EUROPEEN

(45) Date de publication du fascicule du brevet :
07.08.91 Bulletin 91/32

(51) Int. Cl.⁵ : **F16B 13/12**

(21) Numéro de dépôt : **88400547.1**

(22) Date de dépôt : **09.03.88**

(54) **Cheville à expansion.**

(30) Priorité : **12.03.87 FR 8703406**

(43) Date de publication de la demande :
**14.09.88 Bulletin 88/37**

(45) Mention de la délivrance du brevet :
**07.08.91 Bulletin 91/32**

(84) Etats contractants désignés :
**BE DE ES FR GB IT NL SE**

(56) Documents cités :
**EP-A- 0 188 173
DE-A- 3 444 988
DE-A- 3 446 158
FR-A- 2 273 968
FR-A- 2 552 502
US-A- 1 821 401**

(73) Titulaire : **SOCIETE DE PROSPECTION ET
D'INVENTIONS TECHNIQUES SPIT
Route de Lyon
F-26501 Bourg-Les-Valence Cédex (FR)**

(72) Inventeur : **Revol, Gérard
Chateaudouble
F-26120 Chabeuil (FR)**
Inventeur : **Barthomeuf, Jean-Paul
Alixan Le Village
F-26300 Bourg De Peage (FR)**

(74) Mandataire : **Bloch, Gérard et al
2, square de l'Avenue du Bois
F-75116 Paris (FR)**

EP 0 282 411 B1

Jouve, 18, rue Saint-Denis, 75001 PARIS

## Description

La présente invention concerne une cheville à expansion comprenant une douille à section interne circulaire et constante, possédant une extrémité de fixation et une extrémité fendue expansible par laquelle la douille est destinée à être introduite dans un trou d'ancrage, et des moyens d'expansion cunéiformes comprenant un premier coin, solidaire de la douille, et un second coin, réuni au premier coin le long d'une zone fracturable et destiné, sous l'action d'un outil de frappe, à coopérer avec le premier coin pour provoquer l'expansion de l'extrémité fendue de la douille.

Une telle cheville sert, par exemple, à la fixation de plaques de revêtement de murs en béton.

On connaît déjà une cheville du type mentionné ci-dessus par le document EP-A-0188173. Mais avec la cheville de ce document, il y a un risque que l'élément d'expansion soit chassé à l'intérieur de la douille, vers l'axe de celle-ci, et n'assure plus sa fonction d'expansion. Les moyens d'expansion de cette cheville ne se trouvent pas à l'intérieur de la douille et il ne faut surtout pas qu'ils y soient chassés. Ils s'appuient latéralement sur les flancs de l'évidement de la douille.

La présente invention vise à éliminer le risque présenté par la cheville du document EP-A-0188173.

A cet effet, la présente invention concerne une cheville du type mentionné ci-dessus, caractérisée par le fait que les moyens d'expansion sont disposés à l'intérieur de la douille dont ils épousent la paroi intérieure, le premier coin étant légèrement en saillie hors de son extrémité fendue et destiné à venir en butée contre le fond du trou d'ancrage.

Dans la forme de réalisation préférée de la cheville de l'invention, la douille et les coins d'expansion forment une seule pièce obtenue à partir d'un flanc de tôle découpé, replié et roulé.

L'invention sera mieux comprise à l'aide de la description suivante de plusieurs formes de réalisation de la cheville de l'invention, en référence aux dessins annexés, sur lesquels :

— la figure 1 est une vue en coupe axiale de la forme de réalisation préférée de la cheville de l'invention ;

— la figure 2 est une vue en bout de la cheville de la figure 1 ;

— la figure 3 est une vue en plan d'un flanc de tôle découpé pour la formation par pliage et roulage de la cheville de la figure 1 ;

— la figure 4 est une vue en plan d'un autre flanc de tôle découpé pour la formation par pliage et roulage de la cheville de la figure 1, et

— la figure 5 est une vue en coupe axiale de la cheville de la figure 1, après ancrage et fixation à un mur d'une plaque de revêtement.

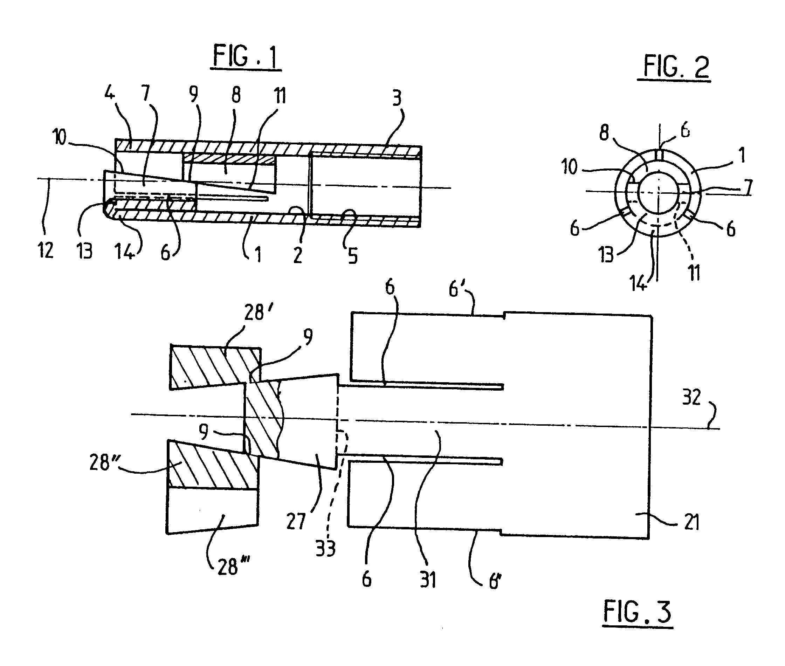

La cheville représentée sur les figures 1 et 2, comporte une douille 1 d'axe 12 dont la paroi intérieure 2 a une section circulaire constante, depuis une extrémité de fixation 3 jusqu'à l'autre extrémité expansible 4. La portion d'extrémité 3 est ici pourvue d'un taraudage intérieur 5 pour le vissage d'un vis de fixation dont il sera question ci-après. Un filetage externe aurait tout aussi bien pu être prévu sur cette portion 3. La portion d'extrémité 4 est pourvue de fentes 6, ici au nombre de trois, pour son expansion par écartement des jambes ménagées entre les fentes. La cheville comporte aussi, à l'intérieur de la douille, un premier coin 7, légèrement en saillie hors de l'extrémité expansible 3 de la douille, et un deuxième coin 8 réuni au premier le long de deux zones fragiles et fracturables 9. Ces deux coins 7, 8 sont de forme semi-tubulaire, avec leurs parois cylindriques respectives épousant la paroi intérieure 2 de la douille et les plans respectifs 10, 11 de leurs bords libres longitudinaux inclinés sur l'axe 12 de la douille et dans le prolongement l'un de l'autre. Le coin 8 est ainsi solidaire du coin 7 qui est lui-même, par son bord externe 13, solidaire de la douille par le bord 14 de la portion d'extrémité expansible.

La cheville qui vient d'être décrite a été formée à partir d'un flanc de tôle. En référence à la figure 3, on a découpé, dans ce flanc de tôle, la surface développée de la douille et des deux coins de la cheville, et obtenu ainsi une partie sensiblement rectangulaire 21 — la douille —, une partie trapézoïdale 27 — le premier coin —, prolongeant la portion rectangulaire 21 au-delà de la portion centrale d'un de ses deux petits côtés, et deux autres parties trapézoïdales 28', 28" — le deuxième coin —, prolongeant latéralement la partie trapézoïdale 27.

La partie trapézoïdale 27 prolonge en fait une jambe 31 s'étendant entre deux fentes 6 pratiquées dans la partie 21 parallèlement à ses grands côtés. Les grands côtés ont été découpés en 6', 6", sur la même longueur que les fentes 6, pour former la troisième fente 6 de la douille. La grande base 33 de la partie trapézoïdale 27 est commune à celle-ci et à la jambe 31. Chaque partie trapézoïdale latérale 28', 28" correspond sensiblement à la moitié de la partie 27, les bords extérieurs de ces parties latérales étant parallèles aux grands côtés de la partie rectangulaire 21 et leurs bords intérieurs prolongeant les bords extérieurs de la partie trapézoïdale 27, avec de chaque côté, une portion commune 9. La longueur des grands côtés de la partie 21 est égale à celle de la douille 1, la longueur de ses petits côtés, sensiblement à la circonférence de la douille. La longueur des parties trapézoïdales est égale à celle des coins.

On remarquera que, au lieu de découper la partie trapézoïdale 28', symétrique de la partie 28" par rapport à la ligne de symétrie 32 de l'ensemble, on pourrait tout aussi bien découper une partie trapézoïdale 28", 28'" identique à la partie 27, mais retournée, la portion 28'" de cette partie 28", 28'" étant symétrique de la portion 28″ par rapport à son bord parallèle à la ligne 32.

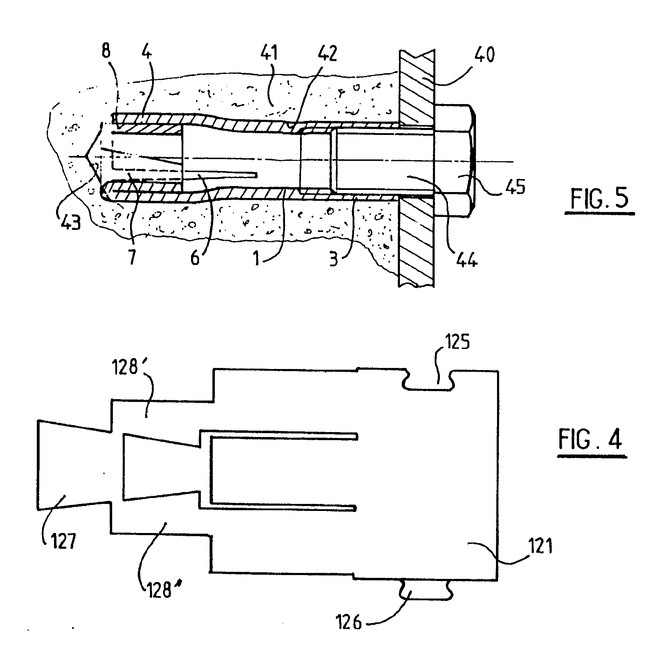

De même, au lieu de découper la partie trapézoïdale centrale 27 dans le prolongement de la portion rectangulaire 21, comme sur la figure 3, on pourrait inverser la disposition de cette portion trapézoïdale centrale et des autres portions trapézoïdales latérales, pour découper les portions trapézoïdales latérales 128′, 128″ dans le prolongement de la portion rectangulaire 121, et entre cette portion rectangulaire 121 et la portion trapézoïdale centrale 127 (figure 4). Dans ce cas, les bords latéraux de cette portion centrale 127 sont inclinés en sens inverse de celui de la portion centrale 27 de la figure 3.

Le flanc de tôle ayant été ainsi découpé, on rabat les parties trapézoïdales 27, 28 sur la partie rectangulaire 21, autour de la grande base 33 de la partie 27. On roule ensuite ces portions de tôle en un cylindre d'axe parallèle à la ligne 32 et fermé le long d'une génératrice confondue avec les bords longitudinaux de la partie 21, par tout moyen approprié tel qu'agrafage, soudage. On remarquera sur la figure 4 une découpe 125 et une languette 126 pour l'agrafage.

Ayant décrit la cheville de l'invention, son utilisation, ou son fonctionnement, peut maintenant être abordé, en référence à la figure 5.

Soit donc l'objectif de fixer une plaque de revêtement 40 sur un mur en béton 41.

On fore au préalable un trou d'ancrage 42 dans le mur 41, de diamètre correspondant au diamètre extérieur de la cheville. On introduit ensuite la douille dans le trou, par son extrémité 4, et on l'enfonce dans le trou jusqu'à ce que le coin 7 vienne en butée contre le fond 43 du trou. Puis à l'aide d'un outil qu'on introduit dans la douille par son extrémité 3, on frappe sur le coin 8, ce qui fracture les zones fragiles 9 de liaison entre les deux coins. Poursuivant la frappe, on enfonce le coin 8 dans la douille, celui-ci se déplaçant alors sur le coin 7 le long des plans 10, 11 avec un effet de coin. Cet effet provoque l'ouverture des fentes 6, l'écartement des jambes de la portion expansible 4 de la douille, bref son expansion et par conséquent son ancrage dans la paroi du trou 42.

On applique ensuite la plaque 40 contre le mur, et à travers un orifice percé dans la plaque, on visse une vis 44 dans la partie taraudée 3 de la douille pour fixer la plaque entre le mur 41 et la tête 45 de la vis 44.

Bien que l'invention visait essentiellement une cheville formée à partir d'un seul flanc de tôle, on notera qu'il n'est pas indispensable, pour préserver son caractère monobloc, que la cheville de l'invention soit ainsi formée. C'est ainsi que les deux coins peuvent être formés à part et fixés ensuite à l'élément tubulaire par serrage, soudage ou collage. Par ailleurs, le coin, destiné à faire légèrement saillie hors de l'extrémité expansible de la douille, ou la portion d'extrémité expansible de l'élément tubulaire, pourra avantageusement être pourvu d'un rebord, d'une patte ou d'une collerette de maintien.

Avantageusement encore, le coin arrière pourra être maintenu contre un épaulement interne de l'élément tubulaire. On notera que, quand on ne forme pas la cheville de l'invention à partir d'une même tôle, les éléments cunéiformes d'expansion pourraient être, non plus creux, mais pleins.

On remarquera enfin que passer du flanc de la figure 3 à celui de la figure 4 revient à inverser les coins fixe et mobile.

## Revendications

1. Cheville à expansion comprenant une douille (1) à section interne circulaire et constante, possédant une extrémité de fixation (3) et une extrémité fendue expansible (4) par laquelle la douille est destinée à être introduite dans un trou d'ancrage, et des moyens d'expansion cunéiformes, comprenant un premier coin (7), solidaire de la douille et un second coin (8), réuni au premier coin (7) le long d'une zone fracturable (9) et destiné, sous l'action d'un outil de frappe, à coopérer avec le premier coin (7) pour provoquer l'expansion de l'extrémité fendue (4) de la douille, cheville caractérisée par le fait que les moyens d'expansion sont disposés à l'intérieur de la douille (1) dont ils épousent la paroi intérieure (2), le premier coin (7) étant légèrement en saillie hors de son extrémité fendue (4) et destiné à venir en butée contre le fond du trou d'ancrage.

2. Cheville selon la revendication 1, dans laquelle la douille (1) et les coins d'expansion (7, 8) forment une seule pièce.

3. Cheville selon la revendication 2, dans laquelle la douille (1) et les coins d'expansion (7, 8) sont constitués par un flanc de tôle (21, 27, 28 ; 121, 127, 128) découpé, replié et roulé.

4. Cheville selon l'une des revendications 1 à 3, dans laquelle l'extrémité de fixation (3) de la douille (1) est taraudée.

5. Cheville selon l'une des revendications 1 à 4, dans laquelle ladite zone fracturable (9) est divisée en deux parties.

## Patentansprüche

1. Expansionsdübel bestehend aus einer Hülse (1) mit rundem und konstantem Innendurchmesser, welche ein Befestigungsende (3) und ein expansibles geschlitzes Ende (4) aufweist, mit welchem die Hülse in ein Verankerungsloch eingeführt wird, und aus keilförmigen Expansionsmillteln, welche einen ersten Keil (7), der mit der Hülse verbunden ist, und einen zweiten Keil (8) umfassen, welcher mit dem ersten Keil (7) entlang einer Bruchzone (9) verbunden und dazu bestimmt ist, unter Einwirkung eines Schlagwerkzeuges mit dem ersten Keil (7) zusammenzuwirken, um die Expansion des geschlitzten Endes (4) der Hülse zu bewirken, Dübel dadurch gekennzeichnet, daß die Expansionsmittel im Inneren der Hülse (1) angeordnet sind und sich an deren Innenwand (2) anpassen, wobei der erste Keil (7) geringfügig aus ihren geschlitzten Ende (4) herausragt und dazu bestimmt ist, gegen den Grund des Verankerungslochs zur Anlage zu kommen.

2. Dübel gemäß Anspruch 1, bei welchem die Hülse (1) und die Expansionskeile (7, 8) ein einziges Ganzes bilden.

3. Dübel gemäß Anspruch 2, bei welchem die Hülse (1) und die Expansionskeile (7, 8) aus einem ausgestanzte, ; abgekanteten und rundgebogenen Blechstück (21, 27, 28 ; 121, 127, 128) gebildet werden.

4. Dübel gemäß einem der Ansprüche 1 bis 3, bei welchem das Befestigungsende (3) der Hülse (1) mit einem Innengewinde versehen ist.

5. Dübel gemäß einem der Ansprüche 1 bis 4, bei welchem die genannte Bruchzone (9) zweigeteilt ist.

## Claims

1. Expansion plug comprising a sleeve (1) having an internal cross-section circular and constant, with a securing end (3) and an expandable split end (4) by which the sleeve is intended to be introduced into an anchorage hole, and cuneiform expansion means, comprising a first wedge (7), fast with the sleeve, and a second wedge (8), joined to the first wedge (7) along a breakable zone (9) and intended, under the action of a striking tool, to engage the first wedge (7) for causing expansion of the split end (4) of the sleeve, plug characterized in that the expansion means are disposed inside the sleeve (1) and fit the inner wall (2) thereof, the first wedge (7) slightly projecting from its split end (4) and being intended to come into a abutment against the bottom of the anchorage hole.

2. Plug as claimed in claim 1, wherein the sleeve (1) and the expansion wedges (7, 8) form a single piece.

3. Plug as claimed in claim 2, wherein the sleeve (1) and the expansion wedges (7, 8) are formed by a stamped, bent and rolled metal sheet blank (21, 27, 28 ; 121, 127, 128).

4. Plug as claimed in one of claims 1 to 3, wherein the securing end (3), of the sleeve (1) is tapped.

5. Plug as claimed in one of claims 1 to 4, wherein said breakable zone (9) is divided into two parts.

FIG. 1

FIG. 2

FIG. 3

EP 0 282 411 B1

FIG. 5

FIG. 4